# EUROPÄISCHE PATENTSCHRIFT

(11) **EP 3 798 435 B1**
(45) Veröffentlichungstag und Bekanntmachung des Hinweises auf die Patenterteilung: **07.06.2023**
(21) Anmeldenummer: 19199459.9
(22) Anmeldetag: 25.09.2019
(51) Int. Cl.: F02C 1/05, F01D 1/38, F02C 6/16, F01D 1/18, F01D 15/10

(54) **KRAFTWERKEINHEIT FÜR EIN HYBRIDES KRAFTWERK**
POWER STATION UNIT FOR A HYBRID POWER STATION
UNITÉ DE CENTRALE ÉLECTRIQUE POUR UNE CENTRALE ÉLECTRIQUE HYBRIDE

(43) Veröffentlichungstag der Anmeldung: 31.03.2021
(73) Patentinhaber: Leone-Meier, Barbara, 8951 Fahrweid (CH)
(72) Erfinder: Leone, Demetrio, 8951 Fahrweid (CH)
(74) Vertreter: Herrmann, Johanna

(56) Entgegenhaltungen:
- EP-A1- 2 711 650
- GB-A- 2 355 768
- US-A- 5 687 560
- US-A1- 2011 127 773

## Beschreibung

Die vorliegende Erfindung betrifft eine Kraftwerkeinheit für ein hybrides Kraftwerk, welches eine Mehrzahl von Kraftwerkeinheiten umfassen kann.

Der vorliegenden Erfindung liegt daher die Aufgabe zugrunde, den Wirkungsgrad der dezentralen Stromerzeugung durch Verwendung eines hybriden Kraftwerks weiter zu verbessern.

Ein transportfähiges Kraftwerksmodul ist beispielsweise aus der RU2059779 C1 bekannt. Das Kraftwerksmodul ist in einem transportierbaren Container angeordnet und enthält mehrere Zellen für eine Kontrollvorrichtung, eine Gasturbine und einen Generator. In der RU2059779 C1 wird die Lagerung der Gasturbine auf reibungsfreien Lagern beschrieben, welche eine vertikale Ausrichtung von Gasturbine und Generator sowie ihre koaxiale Ausrichtung zueinander ermöglichen. Allerdings wird in dieser Patentschrift nicht auf die Energiequelle Bezug genommen, die zum Betrieb der Gasturbine dient. Vermutlich ist das Kraftwerksmodul der RU2059779 C1 zum Transport in Anlagen bestimmt, in welchen temporär Abgasströme anfallen, die punktuell zur Energiegewinnung genutzt werden können.

Daher besteht Bedarf an einer mobilen Kraftwerkeinheit, mittels welcher Strom erzeugt werden kann, ohne auf eine vorhandene Energiequelle zurückzugreifen. Eine derartige mobile Kraftwerkeinheit soll somit zur dezentralen Stromerzeugung eingesetzt werden können.

Aus der WO2004063567 A1 ist es bekannt, einen Transportcontainer mit Solarpanels auszustatten. Da eine direkte Umwandlung der Sonnenenergie in elektrischen Strom über die Photovoltaikpanels erfolgt, hat die Lösung den Nachteil, dass sie nur bei Tageslicht zur Stromerzeugung verwendet werden kann. Die Möglichkeit der (Zwischen)-speicherung der elektrischen Energie über Batterien wird erwähnt, um diesen Nachteil auszugleichen. Ein System, welches Windenergie oder Wasserkraft dezentral zur Stromerzeugung nutzt und gegebenenfalls in ein Stromnetz einspeist wird in der US9553452 B1 beschrieben.

Aufgabe der Erfindung ist es somit, eine Kraftwerkeinheit bereitzustellen, welche in flexibler Weise temporär zur Umwandlung von Wärmeenergie in elektrische Energie zugeschaltet werden kann oder kontinuierlich betrieben wird, um Wärmeenergie in elektrische Energie umzuwandeln.

Insbesondere ist mittels der Kraftwerkeinheit gespeicherte Wärmeenergie zu jedem beliebigen Zeitpunkt verarbeitbar, indem die gespeicherte Wärmeenergie über einen Wärmetauscher einem kompressiblen Medium zugeführt wird, welches in ein erwärmtes kompressibles Medium transformiert wird. Das erwärmte kompressible Medium wird zum Betrieb der Turbine verwendet.

Die Lösung der Aufgabe der Erfindung erfolgt durch eine Turbine für eine Kraftwerkeinheit für ein hybrides Kraftwerk, die zum Betrieb mit einem erwärmten kompressiblen Medium ausgebildet ist. Vorteilhafte Varianten der Turbine sind Gegenstand der Ansprüche 2 bis 9. Eine Kraftwerkeinheit enthaltend die Turbine ist Gegenstand des Anspruchs 10. Ein Verfahren zum Betrieb einer Turbine für eine Kraftwerkeinheit eines hybriden Kraftwerks ist Gegenstand von Anspruch 11. Ein Verfahren zum Betrieb einer Kraftwerkeinheit ist Gegenstand von Anspruch 12.

Wenn der Begriff "beispielsweise" in der nachfolgenden Beschreibung verwendet wird, bezieht sich dieser Begriff auf Ausführungsbeispiele und/oder Ausführungsformen, was nicht notwendigerweise als eine bevorzugtere Anwendung der Lehre der Erfindung zu verstehen ist. In ähnlicher Weise sind die Begriffe "vorzugsweise", "bevorzugt" zu verstehen, indem sie sich auf ein Beispiel aus einer Menge von Ausführungsbeispielen und/oder Ausführungsformen beziehen, was nicht notwendigerweise als eine bevorzugte Anwendung der Lehre der Erfindung zu verstehen ist. Dementsprechend können sich die Begriffe "beispielsweise", "vorzugsweise" oder "bevorzugt" auf eine Mehrzahl von Ausführungsbeispielen und/oder Ausführungsformen beziehen.

Die nachfolgende detaillierte Beschreibung enthält verschiedene Ausführungsbeispiele für die erfindungsgemässe Turbine sowie die Kraftwerkeinheit. Die Beschreibung einer bestimmten Turbine oder Kraftwerkeinheit ist nur als beispielhaft anzusehen. In der Beschreibung und den Ansprüchen werden die Begriffe "enthalten", "umfassen", "aufweisen"" als "enthalten, aber nicht beschränkt auf" interpretiert.

Eine erfindungsgemässe Turbine ist in einem Turbinengehäuse angeordnet, in welchem ein Strömungskanal für ein kompressibles Medium angeordnet ist. Im Strömungskanal ist eine Antriebswelle und zumindest ein Abtriebslaufrad angeordnet, wobei das Abtriebslaufrad eine Abtriebswelle zum Betrieb eines Generators enthält. Das Abtriebslaufrad ist mit der Abtriebswelle drehfest verbunden. Die Antriebswelle ist nicht mit der Abtriebswelle verbunden. Die Antriebswelle und die Abtriebswelle sind somit nicht gekoppelt, das heisst, die Drehbewegung der Antriebswelle erfolgt unabhängig von der Drehbewegung der Abtriebswelle.

Das heisst, die Antriebswelle und die Abtriebswelle haben insbesondere keine mechanische Verbindung zueinander. Die Antriebswelle und die Abtriebswelle sind nicht über einen Koppelungsmechanismus gekoppelt. Somit sind die Antriebswelle und die Abtriebswelle mechanisch entkoppelt, was auch in der EP2711650 A1 oder der US 5687560 gezeigt ist.

Die Antriebswelle kann eine Rotationsbewegung um die Antriebsachse ausführen. Die Abtriebswelle kann eine Rotationsbewegung um die Abtriebsachse ausführen. Die Antriebsachse und die Abtriebsachse können auf einer gemeinsamen Geraden liegen, das heisst, die Antriebswelle und die Abtriebswelle können koaxial zueinander angeordnet sein. Die Antriebsachse und die Abtriebsachse können aber auch versetzt zueinander angeordnet sein, beispielsweise parallel zueinander. Die Antriebsachse und die Abtriebsachse können auch einen Winkel zueinander einschliessen, der ungleich 180 Grad beträgt.

Das kompressible Medium kann Luft enthalten oder aus Luft bestehen.

Eine Zirkulationsvorrichtung für das kompressible Medium ist vorgesehen, wobei die Zirkulationsvorrichtung mit dem Strömungskanal in fluidleitender Verbindung steht.

Insbesondere kann die Zirkulationsvorrichtung einen Zulauf für ein erwärmtes kompressibles Medium enthalten. Die Zirkulationsvorrichtung kann eine Fluidleitung enthalten, deren fluiddurchströmter Querschnitt zumindest teilweise variabel ist. Der fluiddurchströmte Querschnitt kann nach einem Ausführungsbeispiel in Strömungsrichtung des kompressiblen Mediums stromabwärts des Zulaufs zuerst zunehmen und dann kontinuierlich abnehmen.

Die Zirkulationsvorrichtung enthält eine Verzweigung. Mittels der Verzweigung können mehrere Zuläufe für das kompressible Medium an verschiedenen Stellen des Turbinengehäuses realisiert werden. Das kompressible Medium kann somit an verschiedenen Stellen des Strömungskanals zugeführt werden, das heisst, es ist eine Mehrzahl von Zuläufen vorgesehen.

Der Strömungskanal weist eine Antriebsseite und eine Abtriebsseite auf. Die Antriebsseite enthält die Antriebswelle. Die Abtriebsseite befindet sich im Bereich des Abtriebslaufrads oder grenzt stromabwärts an das Abtriebslaufrad an. Die Abtriebsseite kann einen Teil der Abtriebswelle enthalten, wenn sich das Abtriebslaufrad innerhalb des Strömungskanals befindet.

Mittels der Verzweigung kann das kompressible Medium in zumindest zwei Teilströme aufgeteilt werden. Ein Teilstrom des kompressiblen Mediums ist in den Strömungskanal auf der Antriebsseite einführbar. Ein weiterer Teilstrom des kompressiblen Mediums ist in den Strömungskanal auf der Abtriebsseite einführbar. Gemäss einem Ausführungsbeispiel strömt das kompressible Medium im Strömungskanal von der Antriebsseite zur Abtriebsseite. Der Strömungskanal weist einen Strömungsquerschnitt auf, der von der Antriebsseite in Richtung der Abtriebsseite zunimmt, sodass das kompressible Medium im Strömungskanal expandieren kann. Auf der Antriebsseite ist ein Zulauf für das kompressible Medium angeordnet. Selbstverständlich können mehrere Zuläufe am Umfang des Strömungskanals auf der Antriebsseite vorgesehen werden. Auf der Abtriebsseite ist ein Zulauf für das kompressible Medium angeordnet. Selbstverständlich können mehrere Zuläufe am Umfang des Strömungskanals auf der Abtriebsseite vorgesehen werden.

Die Abtriebswelle ist mittels des Abtriebslaufrads in eine Rotationsbewegung versetzbar, wenn das Abtriebslaufrad vom kompressiblen Medium durchströmt wird.

Das kompressible Medium strömt durch das Abtriebslaufrad. Das Abtriebslaufrad weist Leitelemente auf, beispielsweise Leitschaufeln, die vom strömenden kompressiblen Medium in eine Rotationsbewegung um die Abtriebsachse der Abtriebswelle versetzt werden, wenn das kompressible Medium das Abtriebslaufrad durchströmt.

Das erwärmte kompressible Medium kann durch Wärmezufuhr aus dem kompressiblen Medium erhalten werden. Die Wärmezufuhr kann beispielsweise mittels eines Wärmeträgermediums in einem Wärmetauscher erfolgen.

Gemäss einem Ausführungsbeispiel ist die Antriebswelle mittels einer Startvorrichtung, welche zumindest in einer Einlaufphase die Antriebswelle antreibt, in eine Rotationsbewegung versetzbar.

Gemäss einem Ausführungsbeispiel umfasst die Antriebswelle einen im Wesentlichen konischen Abschnitt. Insbesondere kann der konische Abschnitt eine Profilierung aufweisen. Beispielsweise kann die Profilierung schraubenförmig oder spiralförmig ausgebildet sein, um dem durch den Strömungskanal strömenden kompressiblen Medium einen Drall aufzuprägen.

Gemäss einem Ausführungsbeispiel enthält der Strömungskanal einen ersten, zweiten oder dritten Strömungskanalabschnitt, dessen Querschnittsfläche sich in Richtung der Längsachse des Strömungskanals verändert. Insbesondere kann die Querschnittsfläche des zweiten Strömungskanalabschnitts konstant sein. Die Querschnittsfläche des ersten Strömungskanalabschnitts kann zumindest teilweise zunehmen. Die Querschnittsfläche des zweiten Strömungskanalabschnitts kann grösser sein als die Querschnittsfläche des ersten Strömungskanalabschnitts.

Insbesondere kann im Strömungskanal eine Umlenkung des kompressiblen Mediums oder des erwärmten kompressiblen Mediums von einer Axialströmung in eine Tangentialströmung erfolgen.

Gemäss einem Ausführungsbeispiel kann das Turbinengehäuse ein Heizelement zur Herstellung des erwärmten kompressiblen Mediums enthalten. Zudem kann ein Kanal für im Wärmetauscher hergestelltes erwärmtes kompressibles Medium vorgesehen sein, der zum Zulauf führt, der in den Strömungskanal mündet.

Eine Kraftwerkeinheit für ein hybrides Kraftwerk kann nebst einer Turbine nach einem der vorhergehenden Ausführungsbeispiele einen Wärmespeicher umfassen. Der Wärmespeicher enthält ein erwärmtes Wärmeträgerfluid, welches dem Wärmespeicher von einer Wärmequelle zuführbar ist. Die Wärmequelle kann zur Erwärmung des Wärmeträgerfluids vorgesehen sein, sodass das Wärmträgerfluid in ein erwärmtes Wärmeträgerfluid umwandelbar ist. Das erwärmte Wärmeträgerfluid kann im Wärmespeicher gespeichert werden. Das erwärmte Wärmeträgerfluid kann vom Wärmespeicher mittels geeigneten Fluidleitungen einem Wärmetauscher zugeführt werden. Der Wärmetauscher ist zur Erwärmung eines kompressiblen Mediums mittels des erwärmten Wärmeträgerfluids ausgebildet, wobei ein erwärmtes kompressibles Medium erzeugbar ist. Das erwärmte kompressible Medium kann der Turbine zugeführt werden. Die Turbine ist vom erwärmten kompressiblen Medium antreibbar. Das Wärmeträgerfluid kann Wasser oder eine ölhaltige Flüssigkeit oder eine Salzschmelze umfassen.

Das hybride Kraftwerk kann eine Mehrzahl von Kraftwerkeinheiten enthalten, insbesondere mindestens 2 Kraftwerkeinheiten enthalten.

Nach einem Ausführungsbeispiel kann die Turbine als eine Gasturbine ausgebildet sein, um die Antriebswelle in eine Rotationsbewegung zu versetzen.

Die Turbine ist in einem Turbinengehäuse angeordnet, in welchem ein Strömungskanal für das kompressible Medium angeordnet ist. Der Strömungskanal kann einen ersten, zweiten oder dritten Strömungskanalabschnitt enthalten. Die Querschnittsfläche jedes der Strömungskanalabschnitte kann sich in Richtung der Längsachse des Strömungskanals verändern.

Nach einem Ausführungsbeispiel ist im Strömungskanal ein Laufrad angeordnet, welches mit der Antriebswelle drehfest verbunden ist. Im Strömungskanal kann eine Umlenkung des erwärmten kompressiblen Mediums von einer Axialströmung in eine Tangentialströmung mittels eines Leitelements erfolgen. Das Laufrad kann derartige Leitelemente enthalten. Alternativ kann auch eine Schneckengeometrie verwendet werden, das oder die Leitelemente sind gemäss diesem Ausführungsbeispiel schraubenförmig um die Antriebswelle angeordnet.

Nach einem Ausführungsbeispiel kann der Strömungskanal beheizbar sein. Hierdurch wird die Sogwirkung erhöht, sodass die Strömungsgeschwindigkeit des den Strömungskanal durchströmenden erwärmten kompressiblen Mediums erhöht werden kann. Bei Verwendung eines erwärmten kompressiblen Mediums kann die Drehzahl der Abtriebswelle erhöht werden und demzufolge die elektrische Leistung, die vom Generator erzeugbar ist, erhöht werden. Insbesondere kann das Turbinengehäuse ein Heizelement oder einen Kanal für ein Wärmeträgerfluid enthalten.

Die Wärmequelle kann ein Element aus der Gruppe bestehend aus einer Solarzelle, einem Photovoltaikpaneel, einer Verbrennungskraftmaschine, einer Brennstoffzelle, eines Brennerelements für einen fossilen Brennstoff, umfassen. Die Wärmequelle kann als eine Solarzelle ausgebildet sein oder mit einer Solarzelle koppelbar sein, um das kompressible Medium zu erwärmen.

Wenn die Wärmequelle eine Solarzelle umfasst, kann die Solarzelle als ein Flachkollektor ausgebildet sein. Der Flachkollektor kann insbesondere eine Doppelsteg-Hohlkammerplatte umfassen. Die Doppelsteg-Hohlkammerplatte kann ein transparentes Material enthalten, beispielsweise Acrylglas oder Polycarbonat. Nach einem Ausführungsbeispiel kann die Doppelsteg-Hohlkammerplatte einen Absorberkörper enthalten. Der Absorberkörper kann durch eine Mehrzahl von Dellen in der Doppelsteg-Hohlkammerplatte gebildet sein.

Nach jedem der Ausführungsbeispiele kann die Turbine oder die Kraftwerkeinheit eine Überwachungseinheit umfassen. Mittels der Überwachungseinheit können Betriebsparameter, die mittels Sensoren erfasst werden, ermittelt und überwacht werden. Die Überwachungseinheit kann eine Regelungseinheit umfassen, mittels welcher Temperaturen und Drücke des kompressiblen Mediums, Drehzahlen der Antriebswelle oder der Abtriebswelle, Betriebszeiten der hybriden Kraftwerkseinheit in Bezug auf voreingestellte oder vorgegebene Sollwerte geregelt werden können.

Ein Verfahren zum Betrieb einer Turbine für eine Kraftwerkeinheit für ein hybrides Kraftwerk umfasst die Erzeugung einer Rotationsbewegung der Antriebswelle. Die Turbine ist in einem Turbinengehäuse angeordnet, in welchem ein Strömungskanal für ein kompressibles Medium angeordnet ist. Im Strömungskanal sind die Antriebswelle und zumindest ein Abtriebslaufrad angeordnet, wobei das Abtriebslaufrad eine Abtriebswelle enthält. Die Abtriebswelle wird im Betriebszustand mittels des die Turbine durchströmenden kompressiblen Mediums angetrieben, wobei mittels der Abtriebswelle ein Generator zur Erzeugung elektrischer Energie angetrieben wird, wenn sich die Turbine im Betriebszustand befindet. Die Abtriebswelle wird in eine Rotationsbewegung versetzt, wenn das mit der Abtriebswelle drehfest verbundene Abtriebslaufrad vom kompressiblen Medium angeströmt wird. Die Antriebswelle und die Abtriebswelle sind mechanisch entkoppelt.

Ein Verfahren zum Betrieb einer Kraftwerkseinheit umfasst den Betrieb einer Turbine gemäss einem der vorhergehenden Ausführungsbeispiele. Der Turbine wird ein erwärmtes kompressible Medium zugeführt. Hierzu wird ein erwärmtes Wärmeträgerfluid aus einem Wärmespeicher einem Wärmetauscher zur Erwärmung des kompressiblen Mediums zugeführt, sodass das kompressible Medium mittels des erwärmten Wärmeträgerfluids erwärmt wird, sodass das erwärmte kompressible Medium erzeugt wird, welches der Turbine zugeführt wird. Die Turbine wird gemäss diesem Ausführungsbeispiel vom erwärmten kompressiblen Medium betrieben.

Der Wärmespeicher enthält somit ein erwärmtes Wärmeträgerfluid, welches dem Wärmespeicher von einer Wärmequelle zugeführt wird und im Wärmespeicher gespeichert wird. Das Wärmeträgerfluid kann mittels der Wärmequelle erwärmt werden, wobei das Wärmträgerfluid in ein erwärmtes Wärmeträgerfluid umgewandelt wird.

Insbesondere kann die Antriebswelle mittels einer Startvorrichtung in eine Drehbewegung versetzt werden, um eine Fluidströmung des kompressiblen Mediums oder des erwärmten kompressiblen Mediums zu erzeugen.

Eine derartige Kraftwerkseinheit kann eine Produktionsleistung von mindestens 50 kW bei einer Spannung von 400 V und einer Frequenz von 50 Hz liefern.

Die Turbine erzeugt keine schädlichen Emissionen, insbesondere kein CO₂, keine Stickoxyde (NOx) sowie keinen Feinstaub, da das kompressible Medium keiner stofflichen Veränderung unterliegt.

Die Antriebswelle wird gemäss einem Ausführungsbeispiel mittels einer Startvorrichtung, insbesondere einem Elektrostarter angetrieben, welcher wiederum von einer 24V Batterie gespeist werden kann. Die Startvorrichtung wird jedoch nur für die Anlaufphase benötigt, das heisst für eine kurze Zeitspanne von maximal 10 Minuten, um die Antriebswelle in eine Rotationsbewegung zu versetzen und einen Eingangsstrom des kompressiblen Mediums zu erzeugen.

Das kompressible Medium kann erwärmt werden. Die Erwärmung des kompressiblen Mediums ermöglicht dessen Expansion auf ein grösseres Volumen, welches ein Mehrfaches des Volumens des Eingangsstroms beträgt. Wenn eine Expansion nicht möglich ist, erhöht sich der Druck des kompressiblen Mediums im Turbinengehäuse entsprechend, sodass ein komprimiertes kompressibles Medium erhalten wird. Das komprimierte kompressible Medium wird auf das oder die mit der Abtriebswelle gekoppelten Abtriebslaufräder geleitet. Die Abtriebslaufräder werden mittels des kompressiblen Mediums in eine Rotationsbewegung versetzt, sodass die Abtriebswelle eine entsprechende Rotationsbewegung ausführen kann. Auf der Abtriebswelle befindet sich ein Generator zur Stromerzeugung. Wenn die Abtriebswelle in eine Rotationsbewegung versetzt wird, kann somit mittels der erfindungsgemässen Kraftwerkseinheit Strom mittels des Generators erzeugt werden.

Ein hybrides Kraftwerk nach einem der vorgehend beschriebenen Ausführungsbeispiele findet vorzugsweise Verwendung in Gegenden, die nicht an ein zentrales Stromnetz angeschlossen werden können.

Die Kraftwerkeinheit erzeugt keine Emissionen, insbesondere kein CO₂. Die Kraftwerkeinheit kann zwar bis zu 26'830 Bauteile inkl. Kleinmaterial und Verbindungselemente enthalten, allerdings enthalten die Bauteile keine Bestandteile, die Elemente aus der Gruppe der seltenen Erden enthalten, sodass für die Entsorgung einer Kraftwerkeinheit, die ausser Betrieb genommen wird, keine besonderen Vorkehrungen getroffen werden müssen.

Eine Kraftwerkeinheit kann in einem handelsüblichen Transportcontainer Platz finden, beispielsweise in einem Container von ungefähr 6 Meter (20 Fuss) Baulänge enthalten sein. Ein derartiger Container kann beispielsweise als 20 Fuss Schiffscontainer ausgebildet sein, der die nachfolgenden Abmessungen aufweist: 5,66 m x 2,07 m x 2,2 m. Hieraus ergibt sich eine benötigte Standfläche von 11,7 m² sowie eine Höhe von 2,2 m. Das Gewicht einer derartigen Kraftwerkeinheit beträgt gemäss einem Ausführungsbeispiel 12,3 Tonnen. Der Schiffscontainer wird als Transportbehälter für eine Kraftwerkeinheit in der See- und Binnenschifffahrt und im kombinierten Verkehr auf Strasse und Schiene eingesetzt. Sobald der Container aufgestellt ist, kann die Kraftwerkeinheit in Betrieb genommen werden, die Stromproduktion kann beginnen und die Kraftwerkeinheit direkt am lokalen Stromnetz angeschlossen werden oder, je nach Bedarf, als eigenständige Stromversorgung an abgelegenen Orten eingesetzt werden.

Der Container enthält die Kraftwerkeinheit, enthaltend einen Wärmespeicher und eine Turbine, die mit zugehörigen Hilfsausrüstungen betrieben werden kann, sowie eine Überwachungseinheit, die auch eine Monitoringeinheit umfassen kann. Die Überwachungseinheit überwacht den Betrieb der Kraftwerkeinheit permanent, erkennt Fehler frühzeitig und behebt diese, soweit möglich, selbstständig. Wenn eine Monitoringeinheit eingesetzt werden, können Wartungsarbeiten präventiv ausgeführt werden, sodass keine Betriebsunterbrechung erforderlich ist.

Durch die Turbine kann die Wärmeenergie, welche im Wärmespeicher enthalten ist, in eine Drehbewegung einer an die Turbine gekoppelten Abtriebswelle umgewandelt werden, somit die thermische Energie in eine Drehbewegung umgewandelt werden. Die Abtriebswelle ist an einen Generator gekoppelt, der zur Stromerzeugung verwendet wird. Insbesondere kann zwischen der Abtriebswelle und dem Generator ein Getriebe, beispielsweise ein Zweistufen-Getriebe vorgesehen sein, welches den Generator oder Alternator antreibt, um Strom zu produzieren. Der produzierte Strom kann den gesetzlichen Normen entsprechend ins Netz eingespeist werden.

Aus einer Mehrzahl von Kraftwerkeinheiten mit gleicher oder unterschiedlicher Produktionskapazität können thermoelektrische Kraftwerke beliebiger Produktionskapazität zusammengestellt werden. Wenn beispielsweise eine Kraftwerkeinheit eine Leistung von 200 kW liefert, können Z Kraftwerkseinheiten im Wesentlichen Z mal 200 kW liefern. Z kann insbesondere eine ganze Zahl von 1 bis 100 sein. Die Skalierung der Leistung kann somit im Wesentlichen verlustfrei erfolgen, abgesehen von üblichen Leitungsverlusten.

Strom wird von der Kraftwerkseinheit aus der Umwandlung von gespeicherter thermischer Energie erzeugt. Die thermische Energie kann unter Verwendung von Solarenergie, Windenergie, Wasserkraft, Wasserstoff, fossilen Brennstoffen erzeugt werden, kann in einen Wärmespeicher eingespeist und bei Bedarf durch Inbetriebnahme der Turbine in elektrische Energie umgewandelt werden. Die Kraftwerkeinheit benötigt lediglich die Zufuhr einer sehr geringen Wassermenge pro Tag. Der Wärmespeicher kann eine Elektrolyseeinheit umfassen.

Eine Kraftwerkeinheit für die Erzeugung einer Tagesleistung von mindestens 200 kW kann Platz in einem Container von ungefähr 6 Meter (20 Fuss) Baulänge finden. Der Container, welcher die Kraftwerkeinheit enthält, kann somit über Wasserstrassen, Strassen oder Schienen an jeden jeweiligen Einsatzort geliefert werden, da die Abmessungen desselben dem internationalen Standard entsprechen. Die Stromproduktion kann 24 Stunden pro Tag laufen, insbesondere, wenn Wärmequellen vorgesehen sind, mittels welchen Wärmeenergie aus erneuerbaren Energiequellen gewonnen werden kann sowie entsprechende Wärmespeicher, welche der Turbine thermische Energie zur Verfügung stellen, wenn die Energiequelle temporär nicht zur Verfügung steht.

Die Lebensdauer einer Kraftwerkeinheit kann mindestens 30 Jahre betragen. Somit kann höchst effizient auf kleinstem Raum 365 Tage für 24 Stunden während einer Dauer von mindestens 30 Jahren kontinuierlich Elektrizität erzeugt, gespeichert, verbraucht oder ins lokale Netz eingespeist werden.

Die Kraftwerkeinheit kann an jedem Ort der Welt aufgestellt werden, der mittels LKW, Schiff, Eisenbahn oder Helikopter erreichbar ist. Die Kraftwerkeinheit wird am Einsatzort dem Container entnommen und kann sofort Strom produzieren. Wenn die Kraftwerkeinheit mit Solarzellen betrieben wird, beträgt die benötigte Standfläche für das Maschinenhaus und die Solarzellen lediglich 80 m², inklusive allfälliger Zwischenräume. Zwischenräume können beispielsweise bei Verwendung von schirmförmigen Solarzellen entstehen.

Neben traditionellen erneuerbaren Energiequellen, wie Wasserkraft, nimmt der Anteil der erneuerbaren Energien aus Sonne, Holz, Biomasse, Wind, Geothermie und Umgebungswärme für die Energieversorgung zu. Es ist aber auch offensichtlich, dass z.B. die Photovoltaik ihr Potenzial erst in den nächsten Jahrzehnten vollständig ausschöpfen wird. Der Umwandlungsfaktor von Sonnenenergie in Strom ist heute noch zu tief.

Dazu kommt, dass traditionelle Solarkraftwerke nicht eigenständig aus Solarenergie kontinuierlich und während 24 Stunden Strom ins Netz einspeisen können. Somit können diese Solarkraftwerke in Bezug auf Preis und Effizienz nicht mit herkömmlichen Elektrizitätskraftwerken konkurrieren. Die vorliegende Kraftwerkeinheit erfüllt diese Bedürfnisse, da sie Strom während 24 Stunden täglich produzieren kann. Die Energieleistung wird somit in kWh angegeben, da 200 kW pro Stunde produziert werden können. Herkömmliche Photovoltaikanlagen (PV-Anlagen) geben ihre Leistung in kWp an, da sie nur während der Sonnenstunden am Tag Strom produzieren können, also insbesondere während der Höchst-Einstrahlung (Peak) der Sonne. Wenn man diese Einschränkung berücksichtigt, ist eine Kraftwerkeinheit gemäss einem der Ausführungsbeispiele der vorliegenden Erfindung um ein Vielfaches leistungsfähiger als eine herkömmliche PV - Anlage.

Nachfolgend wird die erfindungsgemässe Kraftwerkeinheit anhand einiger Ausführungsbeispiele dargestellt. Es zeigen
Fig. 1 eine Ansicht einer Kraftwerkeinheit für einen Transportcontainer,
Fig. 2 eine Ansicht einer Kraftwerkeinheit nach dem ersten Ausführungsbeispiel,
Fig. 3 eine schematische Darstellung einer Kraftwerkeinheit nach einem der Ausführungsbeispiele,
Fig. 4a einen Schnitt durch eine Turbine für eine Kraftwerkeinheit nach einer ersten exemplarischen Variante, die nicht Teil der Erfindung ist,
Fig. 4b einen Schnitt durch eine Turbine für eine Kraftwerkeinheit nach einer zweiten exemplarischen Variante,
Fig. 4c einen Schnitt durch eine Turbine für eine Kraftwerkeinheit nach einer dritten exemplarischen Variante,
Fig. 5 eine Ansicht einer Kraftwerkeinheit nach einem zweiten Ausführungsbeispiel,
Fig. 6 ein Ausführungsbeispiel eines Wärmespeichers für eine Kraftwerkeinheit nach einem der vorhergehenden Ausführungsbeispiele,
Fig. 7 ein Ausführungsbeispiel einer Wärmequelle für eine Kraftwerkeinheit nach einem der vorhergehenden Ausführungsbeispiele.

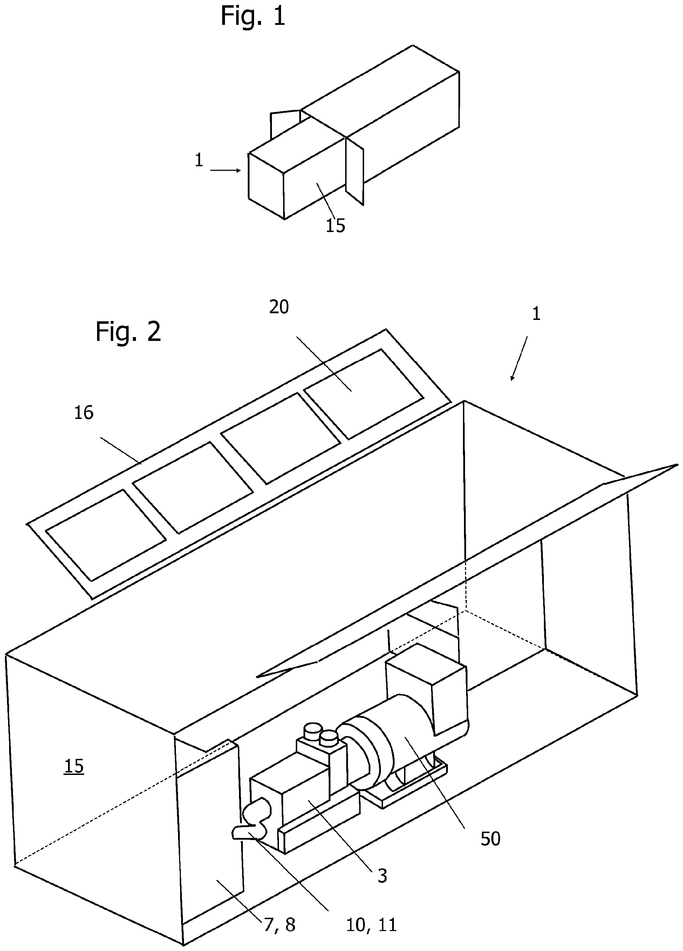

Fig. 1 zeigt eine Kraftwerkeinheit 1 für ein hybrides Kraftwerk, welche in einem handelsüblichen Transportcontainer teilweise aufgenommen ist. Die Kraftwerkeinheit 1 findet im Transportcontainer Platz und kann somit im Transportcontainer über die Strasse, auf dem Wasserweg, dem Luftweg oder mittels Schienenfahrzeugen transportiert werden. Die Kraftwerkeinheit 1 umfasst eine Mehrzahl von Anlagenkomponenten, die in einem Maschinenhaus 15 aufgenommen sind, welches nach dem Einbau der Anlagenkomponenten für den Transport verschlossen wird.

Somit bleiben die Anlagenkomponenten während des Transports im Maschinenhaus 15 vor jeglichem unbefugten Zugriff gesichert und geschützt. Nach der Inbetriebnahme der Kraftwerkeinheit 1 am Einsatzort wird die Kraftwerkeinheit 1 vom Produzenten derart verriegelt, das dem Nutzer oder Betreiber der Kraftwerkeinheit 1 jeglicher Zugang zum Innenraum des Maschinenhauses 15 verwehrt ist. Der Nutzer oder Betreiber der Kraftwerkeinheit soll sich nicht um die Wartung oder Instandhaltung der Kraftwerkeinheit 1 kümmern, da der Produzent der Kraftwerkeinheit 1 für diese Aufgaben allein zuständig ist. Der Produzent kann den Betriebszustand jeder im Einsatz befindlichen Kraftwerkeinheit 1 zu jedem Zeitpunkt kontrollieren, insbesondere auch über Fernwartung.

Das Maschinenhaus 15 und/oder jede der Anlagenkomponenten können mit Identifikationselementen ausgestattet sein, welche eine es ermöglichen, jederzeit zu prüfen, ob sämtliche Anlagenkomponenten vorhanden sind, ob es sich um die im Werk des Produzenten eingebauten Anlagenkomponenten handelt, sowie, ob die Anlagenkomponenten zu irgendeinem Zeitpunkt durch unberechtigten Eingriff manipuliert worden sind. Das Maschinenhaus 15 kann mit einem GPS-Sender ausgestattet sein, sodass der genaue Aufstellungsort jedes Maschinenhauses 15 jederzeit vom Produzenten überprüft werden kann. Insbesondere kann mittels des GPS Sensors eine Rückmeldung an den Produzenten erfolgen, sobald das Maschinenhaus 15 oder eine der Anlagenkomponenten bewegt wird. Insbesondere können zumindest die wichtigsten Anlagenkomponenten mit Positionssensoren ausgestattet sein. Die Positionssensoren können die Position der betreffenden Anlagenkomponente im Maschinenhaus 15 festlegen oder die Position von zwei oder mehr Anlagenkomponenten zueinander festlegen. Durch die Verwendung der Positionssensoren kann die genaue Lage der Anlagenkomponenten im Maschinenhaus 15 mit einer Genauigkeit von weniger als 10 cm, vorzugsweise weniger als 10 mm, besonders bevorzugt in einem Bereich von maximal 5 mm bestimmt werden. Die Positionssensoren können mit Überwachungselementen gekoppelt sein, welche die Lage der Anlagenkomponenten im Maschinenhaus 15 überwachen. Sobald eine Anlagenkomponente sich daher um mehr als 10 cm, insbesondere mehr als 10 mm aus ihrer Sollposition bewegt, kann ein Alarm ausgelöst werden. Der Produzent kann unmittelbar überprüfen, ob es sich um eine autorisierte Veränderung der Position der Anlagekomponente handelt, beispielsweise zur Wartung oder Reparatur derselben, oder ob ein unberechtigter Eingriff in das Maschinenhaus 15 erfolgt ist und sofort geeignete Massnahmen treffen, um einen Schaden für Personen oder die Anlage zu verhindern.

Fig. 2 zeigt ein erstes Ausführungsbeispiel für eine Kraftwerkeinheit 1 für ein hybrides Kraftwerk, wobei das Dach 16 des Maschinenhauses 15 teilweise geöffnet ist. Das offene Dach 16 enthält gemäss diesem Ausführungsbeispiel eine Mehrzahl von Photovoltaikpaneelen 20 und bleibt vorzugsweise nur während der Installation offen, um mittels Sonnenenergie die 200 kW Zelle zu starten oder Wärmeenergie für den Wärmespeicher zu generieren. Danach kann das Dach 16 für den stationären Betrieb geschlossen bleiben. Insbesondere kann die Kraftwerkseinheit 1 derart verschlossen werden, dass sie nur für den Produzenten mit Zugangsberechtigung, insbesondere durch Authentifizierung beispielsweise durch Eingabe eines entsprechenden Zugangscodes, zugänglich bleibt. Hierdurch kann jegliche Manipulation durch einen Nutzer oder Betreiber und insbesondere jede Beschädigung der Anlagenkomponenten verhindert werden. Eine Verletzungsgefahr kann für den gewöhnlichen Betrieb ebenfalls ausgeschlossen werden. Wenn die Kraftwerkeinheit 1 am Bestimmungsort zum ersten Mal in Betrieb genommen wird, erfolgt dies durch das für die Inbetriebnahme zuständige Personal des Produzenten. Sobald die Kraftwerkeinheit 1 störungsfrei betrieben werden kann, kann das Maschinenhaus 15 versiegelt werden, sodass jeglicher ungewollter Zutritt ausgeschlossen werden kann.

Insbesondere kann das Maschinenhaus 15 oder jede der Anlagenkomponenten mit RFID-Identifikationselementen ausgestattet sein. Diese Identifikationselemente können bereits bei Herstellung der Kraftwerkseinheit 1 in jede der Anlagenkomponenten eingebaut werden.

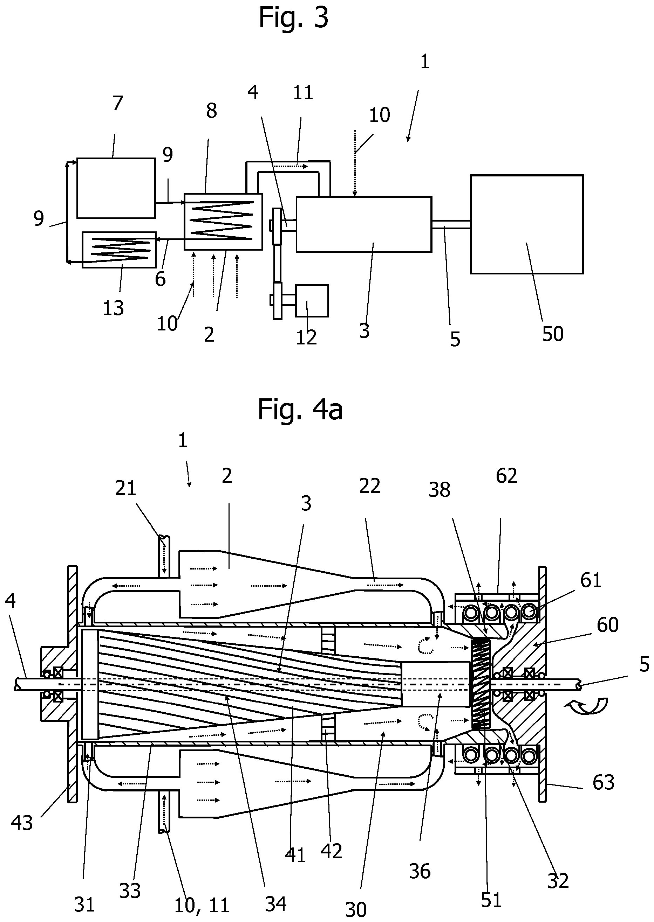

Fig. 3 zeigt eine schematische Darstellung einer Kraftwerkeinheit 1 insbesondere nach einem der in den nachfolgenden Figuren dargestellten Ausführungsbeispiele. Die Kraftwerkeinheit 1 für ein hybrides Kraftwerk enthält einen Wärmespeicher 7, einen Wärmetauscher 8 und eine Turbine 3. Ein Generator 50 ist zur Erzeugung elektrischer Energie mittels einer Abtriebswelle 5 antreibbar, wobei die Abtriebswelle 5 von der Turbine 3 in eine Rotationsbewegung versetzbar ist. Der Wärmespeicher 7 enthält ein erwärmtes Wärmeträgerfluid 9, welches dem Wärmespeicher 7 von einer Wärmequelle 13 zuführbar ist. Die Wärmequelle 13 ist zur Bereitstellung eines erwärmten Wärmeträgerfluids 9 sowie zur Auffüllung des Wärmespeichers 7 vorgesehen. Das erwärmte Wärmträgerfluid 9 wird im Wärmetauscher 8 verwendet, um ein den Wärmetauscher 8 durchströmendes kompressibles Medium 10 zu erwärmen. Der Wärmespeicher 7 ist mit einem Wärmetauscher 8 zur Erwärmung eines kompressiblen Mediums 10 mittels des erwärmten Wärmeträgerfluid 9 fluidleitend verbunden, sodass im Wärmetauscher 8 aus einem kompressiblen Medium 10 ein erwärmtes kompressibles Medium 11 erzeugbar ist. Die Turbine 3 ist mit dem kompressiblen Medium 10 oder dem erwärmten kompressiblen Medium 11 betreibbar.

Zur Inbetriebnahme der Turbine 3 kann eine Startvorrichtung 12 vorgesehen sein. Die Startvorrichtung 12 ist an die Antriebswelle 4 koppelbar. Beispielsweise kann ein Elektrostarter vorgesehen sein.

Fig. 4a zeigt einen Schnitt durch eine Turbine 3 für eine Kraftwerkeinheit 1. Nach dem in Fig. 4a gezeigten Ausführungsbeispiel ist die Turbine 3 als eine Gasturbine ausgebildet. Im Betriebszustand der Turbine 3 wird das kompressible Medium 10, 11 einem Abtriebslaufrad 51 zugeführt. Mittels des Abtriebslaufrads kann eine Abtriebswelle 5 in eine Rotationsbewegung versetzt werden. Die Abtriebswelle 5 kann einen Generator 50 zur Erzeugung elektrischer Energie antreiben (nicht dargestellt).

Die Turbine 3 ist in einem Turbinengehäuse 33 angeordnet. Die Turbine 3 weist gemäss diesem Ausführungsbeispiel einen Strömungskanal 30 auf, der im Innenraum des Turbinengehäuses 33 ausgebildet ist. Der Strömungskanal 30 verläuft somit im Turbinengehäuse 33. Die Querschnittsfläche des Strömungskanals 30 nimmt von der Antriebsseite 31 in Richtung der Abtriebsseite 32 kontinuierlich zu, bis ein Maximalwert erreicht wird, wobei die Querschnittsfläche konstant bleibt, bis das kompressible Medium 10 das Abtriebslaufrad 51 erreicht.

Gemäss dem vorliegenden Ausführungsbeispiel können ein erster Strömungskanalabschnitt 34, ein zweiter Strömungskanalabschnitt 36 und ein dritter Strömungskanalabschnitt 38 unterschieden werden, die sich zwischen der Antriebsseite 31 und der Abtriebsseite 32 erstrecken. Der dritte Strömungskanalabschnitt 38 schliesst an den zweiten Strömungskanalabschnitt 36 an. Der zweite Strömungskanalabschnitt 36 schliesst an den ersten Strömungskanalabschnitt 34 an.

Eine Antriebswelle 4 befindet sich im ersten Strömungskanalabschnitt 34 und im zweiten Strömungskanalabschnitt 36. Im ersten Strömungskanalabschnitt 34 weist die Antriebswelle 4 einen im Wesentlichen konischen Verlauf auf. Der Strömungskanal 30 weist somit im ersten Strömungskanalabschnitt 34 einen Verlauf des Strömungsquerschnitts auf, wobei der Strömungsquerschnitt von der Antriebsseite 31 in Richtung der Abtriebsseite 32 im ersten Strömungskanalabschnitt 34 zunimmt. Gemäss dem vorliegenden Ausführungsbeispiel verjüngt sich der Konus auf der Antriebswelle 4 in Richtung des zweiten Strömungskanalabschnitts 36. Im zweiten Strömungskanalabschnitt 36 weist die Antriebswelle 4 im Wesentlichen Zylinderform auf.

Im Strömungskanal 30 sind gemäss dem vorliegenden Ausführungsbeispiel im ersten Strömungskanalabschnitt 34 eine Mehrzahl von Profilierungen 41 angeordnet, welche auf der Antriebswelle 4 angeordnet sind. Insbesondere weist der als Konus ausgebildete Abschnitt der Antriebswelle 4 Profilierungen 41 auf. Stromabwärts der Antriebsseite 31 nimmt die Querschnittsfläche des Strömungskanals 30 im ersten Strömungskanalabschnitt 34 kontinuierlich zu, wobei sich an den ersten Strömungskanalabschnitt 34 ein zweiter Strömungskanalabschnitt 36 sowie ein dritter Strömungskanalabschnitt 38 anschliesst. Im zweiten Strömungskanalabschnitt ist die Querschnittsfläche des Strömungskanals 30 gemäss dem vorliegenden Ausführungsbeispiel im Wesentlichen konstant. Die Fluidströmung wird im ersten Strömungskanalabschnitt 34 und zweiten Strömungskanalabschnitt 36 in eine Drehbewegung versetzt bzw. eine bereits durch die Profilierung 41 induzierte Drehbewegung verstärkt. Zusätzlich können auf der Antriebswelle 4 ein oder mehrere Leitelemente 42 angeordnet sein, mittels welchen die Fluidströmung derart ausgerichtet werden kann, dass zumindest in einem Teilbereich des ersten Strömungskanalabschnitts 34 oder im zweiten Strömungskanalabschnitt 36 dem kompressiblen Medium ein Drall aufgeprägt werden kann. Der Zulauf in das Abtriebslaufrad 51 kann im Wesentlichen verlustfrei erfolgen, da die Strömungsrichtung dem optimalen Anströmwinkel für die Leitschaufeln des Abtriebslaufrads 51 entspricht und daher eine optimale Anströmung der Leitschaufeln des Abtriebslaufrads 51 ermöglicht.

Durch die Verwendung eines sich in Richtung der Abtriebsseite 32 verjüngenden Konus im ersten Strömungskanalabschnitt 34 sowie dem anschliessenden konstanten Strömungsquerschnitt des Strömungskanals 30 im zweiten Strömungskanalabschnitt 36 sowie der Umlenkung der Fluidströmung zur Anströmung des Abtriebslaufrads 51 im dritten Strömungskanalabschnitt 38 kann das kompressible Medium 10, 11 in der Turbine 3 expandieren und durch den Drall im zweiten Strömungskanalabschnitt 36 das Abtriebslaufrad 51 in einem optimalen Anströmwinkel anströmen. Durch die Expansion des kompressiblen Mediums 10, 11 entsteht eine zusätzliche Sogwirkung an der Antriebsseite 31, sodass gemäss dieser Bauart kein zusätzliches Gebläse für den Betrieb der Turbine 3 erforderlich ist.

Die Sogwirkung kann noch verstärkt werden, wenn die Turbine 3 beheizt wird oder der Turbine 3 ein erwärmtes kompressibles Medium 11 zugeführt wird. Beispielsweise kann im Turbinengehäuse 33 ein Heizelement angebracht sein. Alternativ oder ergänzend hierzu können sich im Turbinengehäuse 33 Kanäle für ein Wärmeträgerfluid befinden (nicht dargestellt). Als Wärmeträgerfluid kann beispielsweise das erwärmte Wärmeträgerfluid 9 zum Einsatz kommen, welches über eine in Fig. 4a nicht dargestellte Leitung direkt vom Wärmespeicher 7 (siehe Fig. 3) zu den Kanälen geführt werden kann.

Gemäss dem vorliegenden Ausführungsbeispiel kann der Drall des den Strömungskanal 30 durchströmenden kompressiblen Mediums 10, 11 durch die Profilierung 41 im ersten Strömungskanalabschnitt 34 verstärkt werden, wenn das kompressible Medium 10, 11 durch den Strömungskanal 30 geleitet wird. Der verstärkte Drall kann zu einer Erhöhung der Fliessgeschwindigkeit des kompressiblen Mediums 10, 11 führen, wodurch die Rotationsgeschwindigkeit des Abtriebslaufrads 51 erhöht werden kann, sodass eine höhere Drehzahl der Abtriebswelle 5 erzielbar ist. Hierdurch wird die Leistung des Generators 50 (hier nicht dargestellt) erhöht und somit die Effektivität der Kraftwerkseinheit 1 überraschenderweise weiter verbessert.

Die Turbine 3 enthält gemäss dem vorliegenden Ausführungsbeispiel eine Zirkulationsvorrichtung 2 für das kompressible Medium 10, 11. Die Zirkulationsvorrichtung 2 steht mit dem Strömungskanal 30 in fluidleitender Verbindung. Insbesondere kann die Zirkulationsvorrichtung 2 einen Zulauf 21 für ein erwärmtes kompressibles Medium 11 enthalten. Eine Mehrzahl derartiger Zuläufe 21 kann vorgesehen sein. In Fig. 4a sind zwei derartige Zuläufe 21 gezeigt. Es könnten auch mehr als zwei Zuläufe 21 vorgesehen sein. Die Zuläufe 21 können in eine gemeinsame Förderleitung münden. Die Förderleitung kann beispielsweise ringförmig ausgebildet sein. Die ringförmige Förderleitung kann um den Strömungskanal 30 herum verlaufen, beispielsweise einen Ring um das Turbinengehäuse 33 ausbilden. Die Förderleitung ist in der vorliegenden Darstellung weggelassen. Mittels der Förderleitung gelangt das erwärmte kompressible Medium vom Wärmetauscher 8 zu dem oder den Zuläufen 21.

Die Zirkulationsvorrichtung 2 enthält eine Fluidleitung 22, deren fluiddurchströmter Querschnitt zumindest teilweise variabel ist. Die Fluidleitung 22 erstreckt sich von der Antriebsseite 31 zur Abtriebsseite 32. Die Fluidleitung 22 weist eine Mündungsöffnung in den Strömungskanal 30 auf, welche in der Nähe der Antriebsseite 31 angeordnet ist. Die Fluidleitung 22 weist eine Mündungsöffnung in den Strömungskanal 30 auf, welche in der Nähe der Abtriebsseite 32 angeordnet ist. Gemäss dem vorliegenden Ausführungsbeispiel liegt die letztere Mündungsöffnung zwischen dem zweiten Strömungskanalabschnitt 36 und dem dritten Strömungskanalabschnitt 38.

Gemäss dem vorliegenden Ausführungsbeispiel nimmt der fluiddurchströmte Querschnitt der Fluidleitung 22 stromabwärts des Zulaufs 21 in Strömungsrichtung des kompressiblen Mediums 10, 11 zuerst zu und dann kontinuierlich ab. Insbesondere kann die Fluidleitung 22 stromabwärts des Zulaufs 1 eine diffusorartige Erweiterung des Strömungsquerschnitts enthalten, an welche eine düsenartige Verengung des Strömungsquerschnitts anschliesst.

Insbesondere weist die Zirkulationsvorrichtung 2 eine Verzweigung auf. Das durch den oder die Zuläufe 21 in die Fluidleitung 22 gelangende kompressible Medium 10, 11 wird an der Verzweigung entweder in einen Fluidleitungsabschnitt geleitet, welcher zur Mündungsöffnung in der Nähe der Antriebsseite 31 führt oder in einen Fluidleitungsabschnitt geleitet, welcher zur Mündungsöffnung in der Nähe der Antriebsseite 32 führt. Ein erstes Teilvolumen des kompressiblen Mediums 10, 11 in der Fluidleitung 22 strömt somit in der Nähe der Antriebsseite 31 in den Strömungskanal 30, ein zweites Teilvolumen des kompressiblen Mediums 10, 11 strömt in der Nähe der Abtriebsseite 32 in den Strömungskanal 30.

Wenn eine Mehrzahl von Fluidleitungen 22 vorgesehen ist, strömen eine Mehrzahl von ersten Teilvolumina des kompressiblen Mediums 10, 11 in jeder der Fluidleitungen 22 auf der Antriebsseite 31 in den Strömungskanal 30, eine Mehrzahl von zweiten Teilvolumina des kompressiblen Mediums 10, 11 strömen auf der Abtriebsseite 32 in den Strömungskanal 30.

Wenn der Strömungsquerschnitt des Strömungskanals 30 zunimmt, wie im vorliegenden Ausführungsbeispiel für den ersten Strömungskanalabschnitt 34 gezeigt ist, erfolgt eine Expansion jedes der ersten Teilvolumina. Zudem strömt das kompressible Medium 10, 11 unter Ausbildung eines Dralls durch den Strömungskanal 30 in Richtung der Abtriebsseite 32. Durch die Rotation der Antriebswelle 4 sowie der auf der Antriebswelle 4 befindlichen Profilierungen 41 enthält der Vektor, welcher die Strömungsgeschwindigkeit des kompressiblen Mediums 10, 11 veranschaulicht, eine Axialkomponente und eine Radialkomponente der Strömungsgeschwindigkeit, sodass ein Drall entsteht. Dieser Drall wird durch das radial durch die Mündungsöffnung in der Nähe der Abtriebsseite 32 einströmende kompressible Medium 10, 11 noch verstärkt.

Zudem können im ersten Strömungskanalabschnitt 34 ein oder mehrere Leitelemente 42 angeordnet sein. Das Leitelement 42 enthält Öffnungen für die Fluidströmung, die sich in der Nähe der Profilierung 41 befinden können / und oder in einem Zentralbereich des Strömungskanalquerschnitts angeordnet sein können. Das Leitelement 42 dient auch der Zentrierung der Antriebswelle 4 im Turbinengehäuse 33, in welchem es gleitend gelagert ist.

Durch den Drall kann der Anströmwinkel auf die Leitschaufeln des Abtriebslaufrads 51 optimiert werden, sodass eine möglichst verlustfreie Anströmung der Leitschaufeln des Abtriebslaufrads 51 erfolgen kann.

Das Abtriebslaufrad 51 befindet sich auf der Abtriebswelle 5. Die Abtriebswelle 5 erstreckt sich vom Abtriebslaufrad 51 durch das Turbinengehäuse 33 und überragt das Abtriebswellengehäuse 60. Das Abtriebswellengehäuse 60 enthält mindestens ein Wälzlager, im vorliegenden Ausführungsbeispiel sind zwei Lagerstellen gezeigt.

Dichtungselemente können vorgesehen werden, um zu verhindern, dass Schmiermittel von den Lagern in das kompressible Medium 10, 11 gelangt.

Gemäss dem vorliegenden Ausführungsbeispiel ist das Turbinengehäuse 33 zwischen dem Antriebswellengehäuse 40 und dem Abtriebswellengehäuse 60 eingespannt. Das Antriebswellengehäuse 40 weist hierzu einen Flansch 43 auf. Das Abtriebswellengehäuse 60 weist einen Flansch 63 auf. Der Flansch 43 weist Bohrungen für Spannschrauben auf, der Flansch 63 weist korrespondierende Bohrungen für die Spannschrauben auf. Die Bohrungen und Spannschrauben sind in der vorliegenden Darstellung weggelassen. Mittels der Spannschrauben kann das Turbinengehäuse 33 zwischen dem Antriebswellengehäuse 40 und dem Abtriebswellengehäuse 60 eingespannt werden.

Das Abtriebswellengehäuse 60 kann ein Kühlelement 61 enthalten, welches beispielsweise als eine Rohrschlange ausgebildet ist. Die Rohrschlange enthält ein Kühlmittel, beispielsweise Wasser. Das Kühlelement 61 dient zur Kühlung des kompressiblen Mediums 10, 11, insbesondere für die Variante, gemäss welcher ein erwärmtes kompressibles Medium 11 zum Einsatz kommt, bevor das kompressible Medium 10, 11 in die Umgebung gelangt. Das Kühlelement 61 ist in einem Kühlergehäuse 62 angeordnet, welches sich am Abtriebswellengehäuse 60 oder am Turbinengehäuse 33 abstützt. Das dargestellte Kühlelement 61 ist nur ein Ausführungsbeispiel eines möglichen Kühlelements. Anstelle einer Rohrschlange könnten auch plattenförmige Kühlelemente, gegebenenfalls mit Kühlrippen, vorgesehen sein, wenn eine Luftkühlung ausreichend ist, was zeichnerisch nicht dargestellt ist.

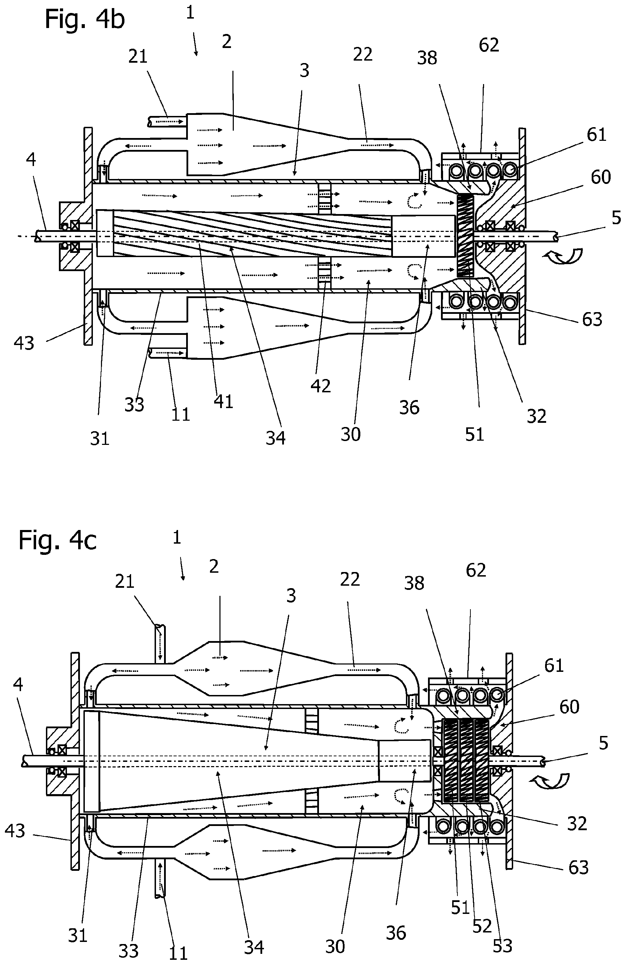

Fig. 4b zeigt einen Schnitt durch eine Turbine 3 für eine Kraftwerkeinheit 1 nach einer zweiten exemplarischen Variante, die nicht Teil der Erfindung ist. Gleichwirkende Elemente tragen in Fig. 4b dieselben Bezugszeichen wie in Fig. 4a. In der Folge soll nur auf die Unterschiede zu dem in Fig. 4a dargestellten Ausführungsbeispiel eingegangen werden.

Gemäss Fig. 4b weist der Strömungskanal 30 im ersten Strömungskanalabschnitt 34 und im zweiten Strömungskanalabschnitt 36 einen im Wesentlichen konstanten Querschnittsverlauf auf. Die Antriebswelle 4 weist wie im vorhergehenden Ausführungsbeispiel eine Profilierung 41 auf, die schraubenförmig oder spiralförmig ausgebildet ist.

Der Zulauf 21 erfolgt gemäss dem vorliegenden Ausführungsbeispiel in dem Bereich der Fluidleitung 22, welcher den grössten Strömungsquerschnitt aufweist. Hierdurch kann die Strömungsgeschwindigkeit des einströmenden kompressiblen Mediums 10, 11 geringgehalten werden. Die Fluidleitung 22 weist eine Düse auf, die durch eine kontinuierliche Abnahme des Strömungsquerschnitts in Strömungsrichtung gekennzeichnet ist. Im Düsenbereich kann somit die Strömungsgeschwindigkeit des kompressiblen Mediums 10, 11 erhöht werden, sodass das kompressible Medium mit erhöhter Strömungsgeschwindigkeit durch die Mündungsöffnung in der Nähe der Abtriebsseite 32 strömt. Hierdurch kann der Drall unmittelbar vor Eintritt in das Abtriebslaufrad 51 noch weiter verstärkt werden. Strömungsverluste im Strömungskanal 30 werden gemäss dieser Variante vermieden, sodass sich diese Variante insbesondere für schnelllaufende Turbinen 3 eignet.

Fig. 4c zeigt einen Schnitt durch eine Turbine 3 für eine Kraftwerkeinheit 1 nach einer dritten exemplarischen Variante. Gleichwirkende Elemente tragen in Fig. 4c dieselben Bezugszeichen wie in Fig. 4a. In der Folge soll nur auf die Unterschiede zu dem in Fig. 4a dargestellten Ausführungsbeispiel eingegangen werden.

Gemäss der in Fig. 4c dargestellten dritten Variante ist keine Profilierung der Antriebswelle 4 im Strömungskanal 30 vorgesehen. Wie in Fig. 4a nimmt der Strömungsquerschnitt im ersten Strömungskanalabschnitt 32 zu, sodass sich die Strömungsgeschwindigkeit aufgrund der Diffusorwirkung im ersten Strömungskanalabschnitt 32 verringert. Das kompressible Medium kann expandieren, sodass eine erhöhte Sogwirkung in der Mündungsöffnung in der Nähe der Antriebsseite 31 entsteht. Hierdurch kann der Anteil des kompressiblen Mediums, welches von der Verzweigung in Richtung der antriebsseitigen Mündungsöffnung erhöht werden.

Der Fluidkanal 22 weist gemäss diesem Ausführungsbeispiel einen sich kontinuierlich erweiternden Kanalabschnitt, einen Kanalabschnitt konstanten Strömungsquerschnitts sowie einen sich verjüngenden Kanalabschnitt auf, in welchem der Strömungsquerschnitt abnimmt. Im sich kontinuierlich erweiternden Kanalabschnitt verringert sich die Strömungsgeschwindigkeit, wobei Wandablösungen und damit Verluste durch die Form des Fluidkanals verringert werden. Durch den sich verjüngenden Kanalabschnitt kann die Strömungsgeschwindigkeit des kompressiblen Mediums 10, 11 wiederum erhöht werden, bevor das kompressible Medium 10, 11 durch die abtriebsseitige Mündungsöffnung in den Strömungskanal 30 der Turbine 3 gelangt. Diese dritte Variante ist insbesondere bei langsam laufenden Turbinen vorteilhaft, da Strömungsverluste, die durch eine Profilierung entstehen können oder durch eine Ablösung der Strömung bei schlagartigen Querschnittserweiterungen, wie in den Fluidkanälen der ersten beiden Varianten gezeigt ist, minimiert werden können.

In Fig. 4c ist auch die Variante dargestellt, dass drei Abtriebslaufräder 51, 52, 53 vorgesehen sind, um Anströmverluste weiter zu verringern. Eine Mehrzahl von Abtriebslaufrädern kann selbstverständlich auch für die Varianten gemäss Fig. 4a oder Fig. 4b vorgesehen sein.

Jedes der beschriebenen Merkmale in jeder der Varianten zum Einsatz kommen. Die Varianten gemäss Fig. 4a oder Fig. 4c sind daher beliebig kombinierbar.

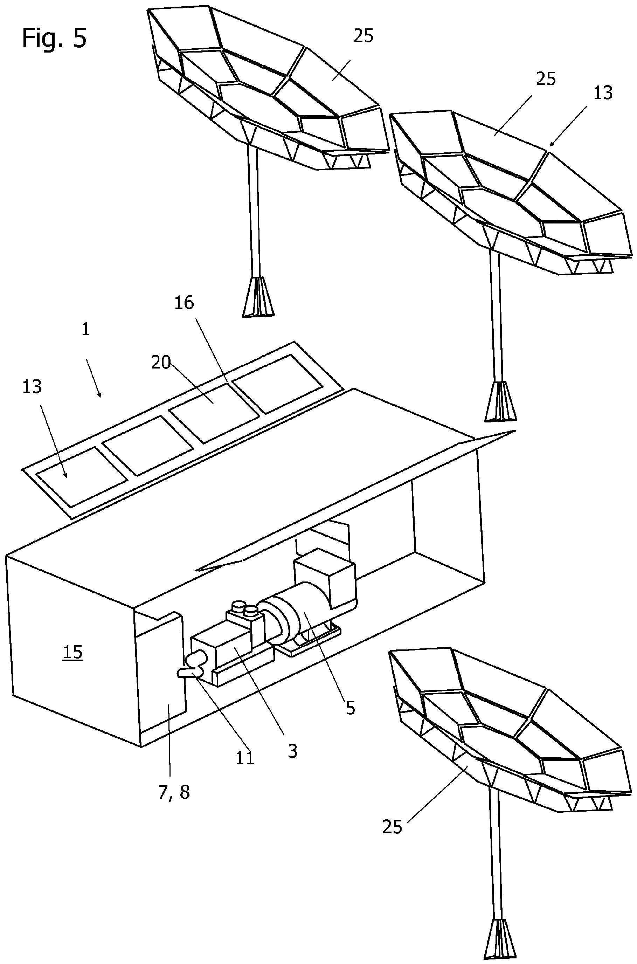

Fig. 5 zeigt eine Ansicht einer Kraftwerkeinheit 1 nach dem zweiten Ausführungsbeispiel, welche wie in Fig. 2 eine Mehrzahl von Photovoltaikpaneelen 20 auf der Innenseite eines aufklappbaren Dachs 16 aufweist. Das Dach 16 dient dazu, das Maschinenhaus 15 verschlossen zu halten, wenn durch die Photovoltaikpaneele 20 keine Energiegewinnung möglich ist oder wenn der Innenraum des Maschinenhauses 15 witterungsbedingt geschlossen bleiben muss.

Die Photovoltaikpaneele 20 können ein Ausführungsbeispiel für Vorrichtung zur Erzeugung von Wärme, das heisst eine Wärmequelle 13, darstellen, die im Wärmespeicher 7 gespeichert werden kann. Der Wärmespeicher 7 kann erwärmtes kompressibles Medium 11 für den Betrieb der Turbine 3 bereitstellen.

Gemäss Fig. 5 kann auch eine Solarzelle 25 vorgesehen sein, um eine Wärmequelle 13 auszubilden. Gemäss Fig. 5 kann auch eine Mehrzahl von Solarzellen 25 zum Einsatz kommen. Insbesondere kann die Solarzelle 25 als ein Flachkollektor zur Erwärmung des Wärmeträgerfluids ausgebildet sein. Der Flachkollektor kann eine Doppelsteg-Hohlkammerplatte umfassen. Insbesondere kann die Doppelsteg-Hohlkammerplatte ein transparentes Material enthalten, beispielsweise Acrylglas oder Polycarbonat. Nach einem Ausführungsbeispiel kann der Flachkollektor, insbesondere die Doppelsteg-Hohlkammerplatte, einen Absorberkörper enthalten. Der Absorberkörper kann durch eine Mehrzahl von Dellen in der Doppelsteg-Hohlkammerplatte gebildet sein.

Eine Startvorrichtung, beispielweise ein Elektrostarter, kann vorgesehen sein, um eine initiale Drehbewegung der Antriebswelle 4 zu erzeugen, sodass eine Strömung des kompressiblen Mediums 10, 11 erzeugt wird und damit über das Abtriebslaufrad 51 die Drehbewegung der Abtriebswelle 5 eingeleitet werden kann.

Die Startvorrichtung kann sich automatisch ausschalten, nachdem sich die Fluidströmung stabilisiert hat, das heisst, eine kontinuierliche Drehbewegung der Antriebswelle 4 erfolgt. Insbesondere kann während der Startphase, das heisst während des Aufbaus eines Dralls in der Fluidströmung im Strömungskanal 30 (siehe Fig. 4a-4c) das kompressible Medium 10, 11 im Turbinengehäuse 33 mittels gespeicherter Wärme erhitzt werden. Somit expandiert das Volumen des erwärmten kompressiblen Mediums 11 auf ein Mehrfaches des Volumens des kompressiblen Mediums 10, wodurch das oder die Abtriebslaufräder 51 angetrieben werden und die Abtriebswelle 5 mit dem benötigten Drehmoment in eine Rotationsbewegung versetzt wird.

Nach einem Ausführungsbeispiel kann anstelle von Wärmeenergie elektrische Energie zum Betrieb der Startvorrichtung verwendet werden. Insbesondere kann die elektrische Energie mittels des Photovoltaikpaneels 20 bereitgestellt werden. Die elektrische Energie kann auch über Energiespeicher bis zum Gebrauch zwischengespeichert werden.

Die mittels des Photovoltaikpaneels 20 erzeugte elektrische Energie kann somit als Starthilfe für die Anlaufphase der Turbine verwendet werden. Beispielsweise kann die Antriebswelle mit einem Elektro-Starter angetrieben werden, welcher von einer 24V Batterie gespeist wird. Somit wird innerhalb einer kurzen Zeitspanne die Antriebswelle 4 der Turbine 3 (siehe Fig. 4a-4c) in eine Drehbewegung versetzt, sodass ein eine Sogwirkung für das kompressible Medium 10, 11 erzeugt werden kann. Wenn das kompressible Medium 10, 11 erhitzt wird, kann es auf mehrfaches des ursprünglichen Volumens expandieren. Durch die Zunahme des Volumens wird der Druck des durch die Turbine 3 strömenden kompressiblen Mediums 10, 11 erhöht, sodass die Drehbewegung des oder der Abtriebslaufräder 51 initiiert oder erhöht werden kann, sodass die Abtriebswelle 5 einen Generator zur Erzeugung elektrischer Energie antreiben kann.

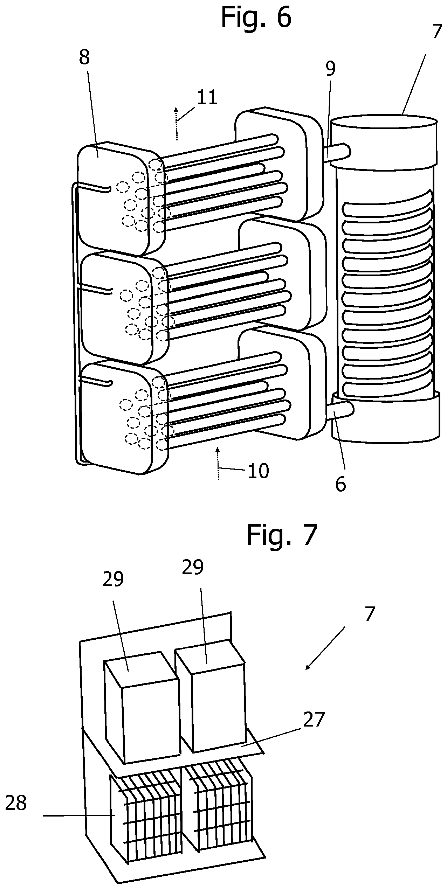

Fig. 6 zeigt ein Ausführungsbeispiel eines Wärmespeichers 7 und eines Wärmetauschers 8 für eine Kraftwerkeinheit 1 nach einem der vorhergehenden Ausführungsbeispiele. Der Wärmetauscher 8 zur Erwärmung eines kompressiblen Mediums 10 wird vom erwärmten Wärmeträgerfluid 9 gespeist, welches in den Rohren des als Rohrbündelwärmetauscher ausgebildeten Wärmetauschers 8 zirkuliert, sodass ein erwärmtes kompressibles Medium 11 erzeugbar ist. Gemäss dem vorliegenden Ausführungsbeispiel strömt das erwärmte Wärmeträgerfluid 9 innerhalb der Rohre. Das Wärmeträgerfluid 9 wird im Wärmespeicher 7 bereitgestellt.

Der Wärmespeicher 7 kann von einer nicht dargestellten Wärmequelle 13 aus der Gruppe bestehend aus einer Solarzelle, einem Photovoltaikpaneel, einer Verbrennungskraftmaschine, einer Brennstoffzelle, eines Brennerelements für einen fossilen Brennstoff gespeist werden.

Fig. 7 zeigt ein Ausführungsbeispiel eines Wärmespeichers 7 für eine Kraftwerkeinheit 1 nach einem der vorhergehenden Ausführungsbeispiele. Dieser Wärmespeicher 7 ist gemäss Fig. 7 als eine Brennstoffzelle 27 ausgebildet. Die Brennstoffzelle 27 enthält eine Mehrzahl von Reaktionseinheiten 28 sowie je einen Vorratsbehälter 29 für Sauerstoff und Wasserstoff.

Gemäss jedem der vorhergehenden Ausführungsbeispiele kann die Kraftwerkeinheit 1 eine Überwachungseinheit umfassen.

Für den Fachmann ist offensichtlich, dass viele weitere Modifikationen zusätzlich zu den beschriebenen Ausführungsbeispielen möglich sind, ohne vom erfinderischen Konzept abzuweichen. Der Gegenstand der Erfindung wird somit durch die vorangehende Beschreibung nicht eingeschränkt und ist durch den Schutzbereich bestimmt, der durch die Ansprüche festgelegt ist. Für die Interpretation der Ansprüche oder der Beschreibung ist die breitest mögliche Lesart der Ansprüche massgeblich. Insbesondere sollen die Begriffe "enthalten" oder "beinhalten" derart interpretiert werden, dass sie sich auf Elemente, Komponenten oder Schritte in einer nicht-ausschliesslichen Bedeutung beziehen, wodurch angedeutet werden soll, dass die Elemente, Komponenten oder Schritte vorhanden sein können oder genutzt werden können, dass sie mit anderen Elementen, Komponenten oder Schritten kombiniert werden können, die nicht explizit erwähnt sind. Wenn die Ansprüche sich auf ein Element oder eine Komponente aus einer Gruppe beziehen, die aus A, B, C bis N Elementen oder Komponenten bestehen kann, soll diese Formulierung derart interpretiert werden, dass nur ein einziges Element dieser Gruppe erforderlich ist, und nicht eine Kombination von A und N, B und N oder irgendeiner anderen Kombination von zwei oder mehr Elementen oder Komponenten dieser Gruppe.

## Patentansprüche

1. Turbine (3) für eine Kraftwerkeinheit (1) für ein hybrides Kraftwerk, wobei die Turbine (3) in einem Turbinengehäuse (33) angeordnet ist, in welchem ein Strömungskanal (30) für ein kompressibles Medium (10, 11) angeordnet ist, wobei der Strömungskanal (30) eine Antriebsseite (31) und eine Abtriebsseite (32) aufweist, wobei das kompressible Medium (10, 11) im Strömungskanal (30) von der Antriebsseite (31) zur Abtriebsseite (32) strömt, wobei der Strömungsquerschnitt des Strömungskanals (30) von der Antriebsseite (31) zur Abtriebsseite (32) zunimmt, sodass das kompressible Medium (10, 11) expandieren kann, wobei im Strömungskanal (30) eine Antriebswelle (4) und zumindest ein Abtriebslaufrad (51) angeordnet ist, wobei das Abtriebslaufrad (51) eine Abtriebswelle (5) zum Betrieb eines Generators enthält, wobei das Abtriebslaufrad (51) mit der Abtriebswelle (5) drehfest verbunden ist, wobei die Antriebswelle (4) nicht mit der Abtriebswelle (5) verbunden ist, **dadurch gekennzeichnet, dass** eine Zirkulationsvorrichtung (2) für das kompressible Medium (10, 11) vorgesehen ist, wobei die Zirkulationsvorrichtung (2) mit dem Strömungskanal (30) in fluidleitender Verbindung steht, wobei die Zirkulationsvorrichtung (2) eine Verzweigung enthält, sodass das kompressible Medium in zumindest zwei Teilströme aufteilbar ist, wobei ein Teilstrom des kompressiblen Mediums in den Strömungskanal auf der Antriebsseite (31) einführbar ist und ein weiterer Teilstrom des kompressiblen Mediums in den Strömungskanal auf der Abtriebsseite (32) stromabwärts des Abtriebslaufrads (51) einführbar ist.

2. Turbine (3) nach Anspruch 1, wobei die Zirkulationsvorrichtung (2) einen Zulauf (21) für ein erwärmtes kompressibles Medium (11) enthält.

3. Turbine (3) nach einem der Ansprüche 1 oder 2, wobei die Zirkulationsvorrichtung (2) eine Fluidleitung (22) enthält, deren fluiddurchströmter Querschnitt zumindest teilweise variabel ist.

4. Turbine (3) nach Anspruch 3, wobei der fluiddurchströmte Querschnitt stromabwärts des Zulaufs (21) in Strömungsrichtung des kompressiblen Mediums (10, 11) zuerst zunimmt und dann kontinuierlich abnimmt.

5. Turbine (3) nach einem der vorhergehenden Ansprüche, wobei ein erwärmtes kompressibles Medium (11) mittels eines Wärmetauschers (8) aus dem kompressiblen Medium (10) erhältlich ist.

6. Turbine (3) nach einem der vorhergehenden Ansprüche, wobei die Antriebswelle (4) mittels einer Startvorrichtung (12) zumindest in einer Einlaufphase in eine Rotationsbewegung versetzbar ist.

7. Turbine (3) nach einem der vorhergehenden Ansprüche, wobei die Antriebswelle (4) einen im Wesentlichen konischen Abschnitt umfasst.

8. Turbine (3) nach einem der vorhergehenden Ansprüche, wobei die Antriebswelle (4) eine Profilierung (41) aufweist, wobei die Profilierung (41) schraubenförmig oder spiralförmig ausgebildet sein kann.

9. Turbine (3) nach einem der vorhergehenden Ansprüche, wobei der Strömungskanal (30) einen ersten, zweiten oder dritten Strömungskanalabschnitt (34, 36, 38) enthält, wobei sich die Querschnittsfläche zumindest eines der ersten, zweiten oder dritten Strömungskanalabschnitte (34, 36, 38) in Richtung der Längsachse des Strömungskanals (30) verändert.

10. Kraftwerkeinheit (1) enthaltend eine Turbine (3) nach einem der vorhergehenden Ansprüche, wobei ein Wärmespeicher (7) zur Bereitstellung eines erwärmten kompressiblen Mediums vorgesehen ist, wobei der Wärmespeicher (7) von einem Element aus der Gruppe bestehend aus einer Solarzelle, einem Photovoltaikpaneel, einer Verbrennungskraftmaschine, einer Brennstoffzelle, eines Brennerelements für einen fossilen Brennstoff, einer Windkraftanlage auffüllbar ist.

11. Verfahren zum Betrieb einer Turbine (3) für eine Kraftwerkeinheit (1) für ein hybrides Kraftwerk, umfassend die Erzeugung einer Rotationsbewegung einer Antriebswelle (4) der Turbine (3), wobei die Turbine (3) in einem Turbinengehäuse (33) angeordnet ist, in welchem ein Strömungskanal (30) für ein kompressibles Medium (10, 11) angeordnet ist, wobei der Strömungskanal (30) eine Antriebsseite (31) und eine Abtriebsseite (32) aufweist, wobei das kompressible Medium (10, 11) im Strömungskanal (30) von der Antriebsseite (31) zur Abtriebsseite (32) strömt, wobei der Strömungsquerschnitt des Strömungskanals (30) von der Antriebsseite (31) zur Abtriebsseite (32) zunimmt, sodass das kompressible Medium (10, 11) expandiert, wobei im Strömungskanal (30) die Antriebswelle (4) und zumindest ein Abtriebslaufrad (51) angeordnet sind, wobei das Abtriebslaufrad (51) eine Abtriebswelle (5) enthält, wobei die Abtriebswelle (5) mittels des die Turbine (3) durchströmenden kompressiblen Mediums (10, 11) angetrieben wird, wobei die Abtriebswelle (5) zum Betrieb eines Generators (50) zur Erzeugung elektrischer Energie angetrieben wird, wobei die Abtriebswelle (5) in eine Rotationsbewegung versetzt wird, wenn das mit der Abtriebswelle (5) drehfest verbundene Abtriebslaufrad (51) vom kompressiblen Medium (10, 11) angeströmt wird, **dadurch gekennzeichnet, dass** die Antriebswelle (4) und die Abtriebswelle (5) mechanisch entkoppelt sind, wobei eine Zirkulationsvorrichtung (2) für das kompressible Medium (10, 11) vorgesehen ist, wobei die Zirkulationsvorrichtung (2) mit dem Strömungskanal (30) in fluidleitender Verbindung steht, wobei die Zirkulationsvorrichtung eine Verzweigung enthält, sodass das kompressible Medium in zumindest zwei Teilströme aufgeteilt wird, wobei ein Teilstrom des kompressiblen Mediums in den Strömungskanal auf der Antriebsseite eingeführt wird und ein weiterer Teilstrom des kompressiblen Mediums in den Strömungskanal auf der Abtriebsseite stromabwärts des Abtriebslaufrads (51) eingeführt wird.

12. Verfahren zum Betrieb einer Kraftwerkeinheit (1) umfassend eine Turbine (3) nach Anspruch 11, wobei ein erwärmtes Wärmeträgerfluid (9) aus einem Wärmespeicher (7) einem Wärmetauscher (8) zur Erwärmung des kompressiblen Mediums (10) zugeführt wird, sodass das kompressible Medium (10) mittels des Wärmeträgerfluids (9) erwärmt wird, wobei ein erwärmtes kompressibles Medium (11) erzeugt wird, wobei das erwärmte kompressible Medium (11) der Turbine (3) zugeführt wird.

## Claims

1. Turbine (3) for a power plant unit (1) for a hybrid power plant, the turbine (3) being arranged in a turbine housing (33) in which a flow channel (30) for a compressible medium (10, 11) is arranged, wherein the flow channel (30) has a drive side (31) and an output side (32), wherein the compressible medium (10, 11) in the flow channel (30) flows from the drive side (31) to the output side (32), wherein the flow cross section of the flow channel (30) increases from the drive side (31) to the output side (32), so that the compressible medium (10, 11) can expand, wherein a drive shaft (4) and at least one output impeller (51) is arranged in the flow channel (30), wherein the output impeller (51) contains a driven shaft (5) for operating a generator, wherein the output impeller (51) is non-rotatably connected to the output shaft (5), wherein the drive shaft (4) is not connected to the output shaft (5), **characterized in that** a circulation device (2) is provided for the compressible medium (10, 11), wherein the circulation device (2) is in fluid-conducting connection with the flow channel (30), wherein the circulation device (2) contains a branch, such that the compressible medium is configured to be divided into at least two partial flows, wherein one partial flow of the compressible medium is configured to be introduced into the flow channel on the drive side (31) and another partial flow of the compressible medium is configured to be introduced into the flow channel on the output side (32) downstream of the output impeller (51).

2. The turbine (3) of claim 1, wherein the circulation device (2) contains a feed (21) for a heated compressible medium (11).

3. The turbine (3) of one of claims 1 or 2, wherein the circulation device (2) contains a fluid passage (22) comprising an at least partially variable cross-section through which the fluid can flow.

4. The turbine (3) of claim 3, wherein the cross-section through which fluid flows downstream of the feed (21) in the direction of flow of the compressible medium (10, 11) first increases and then decreases continuously.

5. The turbine (3) of one of the preceding claims, wherein a heated compressible medium (11) is obtainable from the compressible medium (10) by means of a heat exchanger (8).

6. The turbine (3) of one of the preceding claims, wherein the drive shaft (4) can be set into a rotational movement by means of a starting device (12) at least in a running-in phase.

7. The turbine (3) of one of the preceding claims, wherein the drive shaft (4) comprises a substantially conical section.

8. The turbine (3) of one of the preceding claims, wherein the drive shaft (4) is provided with a profile (41), wherein the profile (41) can be helical or spiral-shaped.

9. The turbine (3) of one of the preceding claims, wherein the flow channel (30) contains a first, second or third flow channel section (34, 36, 38), wherein the cross-sectional area of at least one of the first, second or third flow channel sections (34, 36, 38) changes in the direction of the longitudinal axis of the flow channel (30).

10. Power plant unit (1) containing a turbine (3) of one of the preceding claims, wherein a heat accumulator (7) is provided for providing a heated compressible medium, wherein the heat accumulator (7) is chargeable by an element from the group consisting of a solar cell, a photovoltaic panel, an internal combustion engine, a fuel cell, a burner element for a fossil fuel, a wind turbine.

11. A method for operating a turbine (3) for a power plant unit (1) for a hybrid power plant, comprising generating a rotational movement of a drive shaft (4) of the turbine (3), wherein the turbine (3) is arranged in a turbine housing (33), wherein a flow channel (30) for a compressible medium (10, 11) is arranged in the turbine housing (33), wherein the flow channel (30) has a drive side (31) and a an output side (32), wherein the compressible medium (10, 11) flows in the flow channel (30) from the drive side (31) to the output side (32), wherein the flow cross section of the flow channel (30) increases from the drive side (31) to the output side (32), so that the compressible medium (10, 11) expands, whereby the drive shaft (4) and at least one output impeller (51) are arranged in the flow channel (30), wherein the output impeller (51) contains an output shaft (5), wherein the output shaft (5) is driven by means of the compressible medium (10, 11), wherein the output shaft (5) being driven to operate a generator (50) for generating electrical energy, wherein the output shaft (5) is set in a rotational movement when the output impeller (51), which is non-rotatably connected to the output shaft (5), is driven by the compressible medium (10, 11), **characterized in that** the drive shaft (4) and the output shaft (5) are mechanically decoupled, wherein a circulation device (2) is provided for the compressible medium (10, 11), wherein the circulation device (2) is in fluid communication with the flow channel (30), wherein the circulation device contains a branch, so that the compressible medium is divided into at least two partial flows, wherein one partial flow of the compressible medium is introduced into the flow channel on the drive side and another partial flow of the compressible medium is introduced into the flow channel on the output side downstream of the output impeller (51).

12. A method for operating a power plant unit (1) comprising a turbine (3) of claim 11, wherein a heated heat transfer fluid (9) from a heat accumulator (7) is fed to a heat exchanger (8) for heating the compressible medium (10), so that the compressible medium (10) is heated by means of the heat transfer fluid (9), whereby a heated compressible medium (11) is generated, wherein the heated compressible medium (11) is fed to the turbine (3).

## Revendications

1. Turbine (3) pour une unité de centrale électrique (1) pour une centrale électrique hybride, la turbine (3) étant agencée dans un carter de turbine (33) dans lequel un canal d'écoulement (30) pour un milieu compressible (10, 11) est agencé, dans lequel le canal d'écoulement (30) a un côté entraînement (31) et un côté sortie (32), dans lequel le milieu compressible (10, 11) s'écoule dans le canal d'écoulement (30) depuis le côté entraînement (31) vers le côté sortie (32), dans lequel la section d'écoulement du canal d'écoulement (30) augmente du côté entraînement (31) au côté sortie (32), de sorte que le milieu compressible (10, 11) peut se dilater, dans lequel un arbre d'entraînement (4) et au moins une turbine de sortie (51) sont agencés dans le canal d'écoulement (30), dans lequel la turbine de sortie (51) contient un arbre de sortie (5) pour faire fonctionner un générateur, dans lequel la turbine de sortie (51) est solidaire en rotation de l'arbre de sortie (5), l'arbre d'entraînement (4) n'étant pas relié à l'arbre de sortie (5), **caractérisé en ce qu'**un dispositif de circulation (2) est prévu pour le fluide compressible (10, 11), dans lequel le dispositif de circulation (2) est en communication fluidique avec le canal d'écoulement (30), dans lequel le dispositif de circulation (2) contient une dérivation, de sorte que le milieu compressible est configuré pour être divisé en au moins deux écoulements partiels, dans lequel un écoulement partiel du milieu compressible est configuré pour être introduit dans le canal d'écoulement côté entraînement (31) et un autre écoulement partiel du milieu compressible est configuré pour être introduit dans le canal d'écoulement au côté sortie (32) en aval de la turbine de sortie (51).

2. Turbine (3) selon la revendication 1, dans laquelle le dispositif de circulation (2) contient une alimentation (21) d'un milieu compressible chauffé (11).

3. Turbine (3) selon l'une des revendications 1 ou 2, dans laquelle le dispositif de circulation (2) contient un passage de fluide (22) comprenant une section au moins partiellement variable par laquelle le fluide peut s'écouler.

4. Turbine (3) selon la revendication 3, dans laquelle la section parcourue par le fluide en aval de l'alimentation (21) dans le sens d'écoulement du milieu compressible (10, 11) augmente d'abord puis décroît continûment.

5. Turbine (3) selon l'une des revendications précédentes, dans laquelle un milieu compressible chauffé (11) peut être obtenu à partir du milieu compressible (10) au moyen d'un échangeur de chaleur (8).

6. Turbine (3) selon l'une des revendications précédentes, dans laquelle arbre d'entraînement (4) peut être mis en mouvement de rotation au moyen d'un dispositif de démarrage (12) au moins dans une phase de rodage.

7. Turbine (3) selon l'une des revendications précédentes, dans laquelle l'arbre d'entraînement (4) comprend une section sensiblement conique.

8. Turbine (3) selon l'une des revendications précédentes, dans laquelle l'arbre d'entraînement (4) est pourvu d'un profil (41), dans lequel le profil (41) peut être hélicoïdal ou en forme de spirale.

9. Turbine (3) selon l'une des revendications précédentes, dans laquelle le canal d'écoulement (30) contient une première, deuxième ou troisième section de canal d'écoulement (34, 36, 38), dans laquelle la section transversale d'au moins l'une des premières, deuxièmes ou troisièmes sections de canal d'écoulement (34, 36, 38) change dans la direction de l'axe longitudinal du canal d'écoulement (30).

10. Unité de centrale électrique (1) contenant une turbine (3) selon l'une des revendications précédentes, dans laquelle un accumulateur de chaleur (7) est prévu pour fournir un milieu compressible chauffé, dans lequel l'accumulateur de chaleur (7) est chargeable par un élément de l'ensemble constitué d'une cellule solaire, d'un panneau photovoltaïque, d'un moteur à combustion interne, d'une pile à combustible, d'un élément brûleur pour un combustible fossile, d'une éolienne.

11. Méthode d'opération d'une turbine (3) pour une unité de centrale électrique (1) pour une centrale électrique hybride, comprenant la génération d'un mouvement de rotation d'un arbre d'entraînement (4) de la turbine (3), dans lequel la turbine (3) est agencé dans un carter de turbine (33), dans lequel un canal d'écoulement (30) pour un fluide compressible (10, 11) est agencé dans le carter de turbine (33), dans lequel le canal d'écoulement (30) a un côté d'entraînement (31) et un côté sortie (32), le milieu compressible (10, 11) s'écoulant dans le canal d'écoulement (30) du côté entraînement (31) vers le côté sortie (32), dans lequel la section d'écoulement du canal d'écoulement (30) augmente du côté entraînement (31) au côté sortie (32), de sorte que le milieu compressible (10, 11) se dilate, l'arbre d'entraînement (4) et au moins une turbine de sortie (51) étant disposés dans le canal d'écoulement (30), dans lequel la turbine de sortie (51) contient un arbre de sortie (5), dans lequel l'arbre de sortie (5) est entraîné au moyen du milieu compressible (10, 11), dans lequel l'arbre de sortie (5) étant entraîné pour faire fonctionner un générateur (50) pour générer de l'énergie électrique, l'arbre de sortie (5) étant mis dans un mouvement de rotation lorsque la turbine de sortie (51), qui est reliée de manière non rotative à l'arbre de sortie (5), est entraînée par le milieu compressible (10, 11), **caractérisé en ce que** l'arbre d'entraînement (4) et l'arbre de sortie (5) sont découplés mécaniquement, un dispositif de circulation (2) étant prévu pour le milieu compressible (10, 11), dans lequel le dispositif de circulation (2) est en communication fluidique avec le canal d'écoulement (30), dans lequel le dispositif de circulation contient une dérivation, de sorte que le milieu compressible est divisé en au moins deux écoulements partiels, dans lequel un écoulement partiel du milieu compressible est introduit dans le canal d'écoulement côté entraînement et un autre écoulement partiel du milieu compressible est introduit dans le canal d'écoulement au côté sortie en aval de la turbine de sortie (51).

12. Méthode d'opération d'une unité de centrale électrique (1) comprenant une turbine (3) selon la revendication 11, dans lequel un fluide caloporteur chauffé (9) provenant d'un accumulateur de chaleur (7) est amené à un échangeur de chaleur (8) pour le chauffage du milieu compressible (10), de sorte que le milieu compressible (10) est chauffé au moyen du fluide caloporteur (9), moyennant quoi un milieu compressible chauffé (11) est généré, moyennant quoi le milieu compressible chauffé (11) est amené à la turbine (3).
